# EUROPÄISCHE PATENTSCHRIFT

(11) **EP 1 574 750 B1**
(45) Veröffentlichungstag und Bekanntmachung des Hinweises auf die Patenterteilung: **26.05.2010**
(21) Anmeldenummer: 05005015.2
(22) Anmeldetag: 08.03.2005
(51) Int. Cl.: F16H 3/087

(54) **Getriebe**
Transmission
Transmission

(30) Priorität: 08.03.2004 DE 102004011533; 06.07.2004 DE 102004032827
(43) Veröffentlichungstag der Anmeldung: 14.09.2005
(73) Patentinhaber: Rögelberg Holding GmbH & Co. KG, 49716 Meppen (DE)
(72) Erfinder: Pleus, Karlheinz, 49779 Oberlangen (DE); Gebben, Bernhard, 49767 Twist (DE)
(74) Vertreter: Busse & Busse

(56) Entgegenhaltungen:
- EP-A1- 0 983 716
- FR-A- 458 996
- FR-A- 801 892
- FR-A1- 2 312 184
- GB-A- 370 872
- GB-A- 492 805
- JP-A- 61 021 001
- JP-A- 61 052 444
- JP-A- 62 179 301

## Beschreibung

Die Erfindung betrifft ein Getriebe für vorzugsweise landwirtschaftliche Bodenbearbeitungsmaschinen, insbesondere für Kreiseleggen, mit einer Antriebs- und zumindest einer Abtriebswelle. Antriebswelle und Abtriebswelle sind über Zahnräder miteinander verbunden und das Getriebe weist eine Schaltvorrichtung mit zumindest zwei Schaltstellungen auf, wobei in den verschiedenen Schaltstellungen jeweils eines von wenigstens zwei auf einer Welle angeordneten Zahnrädern mit dieser antriebsmäßig verbunden ist.

Ein bekanntes, mit einer Schaltvorrichtung ausgestattetes Getriebe für vorzugsweise landwirtschaftliche Bodenbearbeitungsmaschinen weist zwei im wesentlichen parallel zueinander verlaufende Wellen auf, deren Stirnräder mit Hilfe der Schaltvorrichtung in Achsrichtung miteinander verbindbar und relativ zueinander verschiebbar sind. Die Kombination von auf unterschiedlichen Wellen befindlichen Stirnrädern miteinander führt zu den vorgesehenen Übersetzungsverhältnissen des Getriebes. Abhängig von der Schaltstellung der Schaltvorrichtung kämmt ein bestimmtes Stirnrad der Antriebswelle mit einem korrespondierenden Stirnrad der weiteren Welle, die das Drehmoment auf eine dritte Welle weiterleitet. Diese ist dann entweder ihrerseits eine Abtriebswelle oder treibt beispielsweise über eine Kegelradanordnung eine Abtriebswelle an. Solche Schaltgetriebe nach dem Stand der Technik bauen insbesondere aufgrund des für die verschiebbaren Stirnräder bereitzuhaltenden Platzes sehr groß und aufgrund des Materialaufwands entsprechend teuer.

Aus der JP-A-61 052444 ist ein Gegenstand nach dem Oberbegriff des Anspruch 1 bekannt. Sie zeigt ein Getriebe für landwirtschaftliche Bodenbearbeitungsmaschinen, insbesondere für Kreiseleggen, mit einer Antriebs- und zumindest einer Abtriebswelle, die über Zahnräder miteinander verbindbar sind, sowie mit einer Schaltvorrichtung mit zumindest zwei Schaltstellungen, wobei in den verschiedenen Schaltstellungen jeweils eines von wenigstens zwei auf einer Welle angeordneten Zahnrädern mit dieser antriebsmäßig verbunden ist und die Zahnräder der Antriebs- und zumindest einer Abtriebswelle als miteinander kämmende Kegelräder ausgebildet sind und wobei auf der Antriebs- und zumindest einer Abtriebswelle jeweils mindestens zwei Kegelräder angeordnet sind, die jeweils paarweise in einer Schaltstellung die Antriebs- und Abtriebswelle miteinander verbinden.

Es ist die Aufgabe der vorliegenden Erfindung, ein Schaltgetriebe der eingangs genannten Art zu verbessern und insbesondere zu verkleinern.

Die Aufgabe wird durch ein Getriebe nach dem Gegenstand des Anspruchs 1 gelöst. Die auf dieser geschalteten Welle befindlichen Kegelräder führen mit den Kegelrädern der anderen Welle zu einem im Vergleich zu den großvolumig und umständlich zu bauenden Lösungen des Standes der Technik deutlich kleines und materialgünstiger herzustellendes Getriebe.

Erfindungsgemäβ sind sowohl auf der Abtriebswelle als auch auf der Antriebswelle jeweils zwei Kegelräder angeordnet, die paarweise miteinander kämmen. Die Verbindung fest definierter Kegelpaare vereinfacht das erfindungsgemäße Getriebe zusätzlich.

Weiterhin hat es sich als vorteilhaft erwiesen, wenn die Kegelräder, die sich auf der schaltbaren Welle befinden und die je nach Schaltstellung mit dieser antriebsmäßig, vorzugsweise formschlüssig, verbunden sind, mit Hilfe einer Schaltmuffe der Schaltvorrichtung in antriebsmäßige Verbindung mit der Welle gebracht werden. Auch diese Ausführungsform ist einfach und ohne große Kosten herzustellen.

Eine weitere Ausführungsform eines erfindungsgemäßen Getriebes weist zumindest ein Stellmittel auf, welches auf mechanische, pneumatische, hydraulische und/oder elektromotorische Weise arbeitet und insbesondere den Schaltvorgang unterstützt.

Des Weiteren bildet das erfindungsgemäße Getriebe mit einem auf einer Abtriebswelle im Bereich einer Bearbeitungsvorrichtung anordbaren zusätzlichen Zahnrad bei der Übertragung auf die Bearbeitungsvorrichtung eine weitere Übersetzungsstufe aus. Da somit nicht mehr alleine die in dem Getriebegehäuse eingefassten Teile des Getriebes die verschiedenen Übersetzungsstufen realisieren müssen, kann ein solches Getriebe noch kleiner bauen.

Das Getriebe kann in einer weiteren Ausführungsform mit einer zweiten Abtriebswelle vorliegen. Dabei wird bevorzugt eine direkte Verbindung zwischen Antriebswelle und der zweiten Abtriebswelle durch miteinander kämmende Kegelräder realisiert. Auf diese Art und Weise werden in dem erfindungsgemäßen Getriebe gleichzeitig zwei Abtriebswellen angetrieben, die beide in einem Winkel zur Antriebswelle angeordnet sein können. Dennoch bleibt es trotz der zwei Abtriebswellen bei einem klein bauenden Gehäuse, da die erfindungsgemäß miteinander kämmenden Kegelräder, von denen sich dann die schaltbaren Kegelräder vorteilhafterweise auf der Antriebswelle befinden, den zur Verfügung stehenden Platz optimal ausnutzen und für kleine Gehäuseabmessungen sorgen. Bei diesem Ausführungsbeispiel treibt so idealerweise ein auf der Antriebswelle befindliches und schaltbares Kegelrad gleichzeitig zwei zu den jeweiligen Abtriebswellen gehörige Kegelräder an.

Weitere Vorteile lassen sich der nachfolgenden Figurenbeschreibung mit schematisch dargestellten Ausführungsbeispielen der Erfindung entnehmen. In den Figuren zeigt:
- Figur 1: ein Ausführungsbeispiel eines erfindungsgemäßen Kegelradgetriebes mit einer einen Durchtrieb aufweisenden Antriebswelle,
- Figur 2: den Gegenstand nach Figur 1 in einer weiteren Schaltstellung,
- Figur 3: den Gegenstand nach Figur 2 mit einer Verschlusskappe statt des Durchtriebs,
- Figur 4: ein weiteres Ausführungsbeispiel der Erfindung mit einer einen Durchtrieb aufweisenden Antriebswelle,
- Figur 4a: den Gegenstand nach Fig. 4 mit an den seitlichen Abtrieben angeordneten Seitengetrieben,
- Figur 5: den Gegenstand nach Figur 1 in einer Seitenansicht sowie zwei seitlichen Abtrieben,
- Figur 6: einen Schnitt durch den Gegenstand nach Fig. 5 in Richtung VI-VI,
- Figur 7: eine Ansicht des Gegenstandes nach Fig. 5 aus Richtung VII.

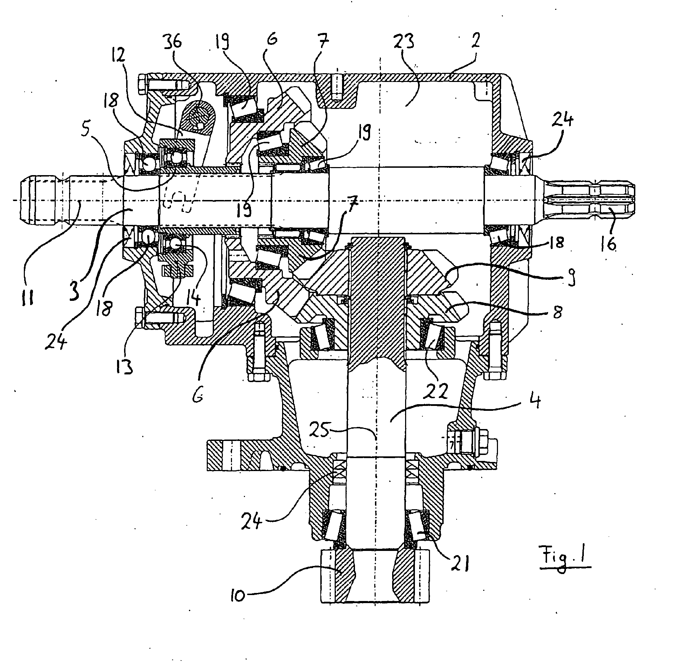

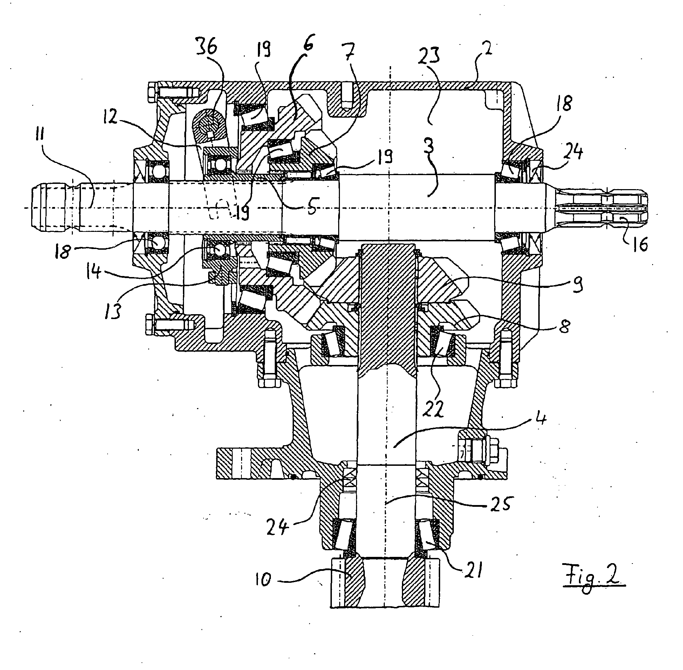

Ein erfindungsgemäßes Getriebe weist ein Gehäuse 2, eine Antriebswelle 3 und eine Abtriebswelle 4 auf. Eine Schaltmuffe 5, die formschlüssig mit der Antriebswelle 3 verbunden ist, ist längs der Antriebswelle 3 verschiebbar gelagert und bringt so wahlweise ein Antriebswellenkegelrad 6, wie in Figur 1 gezeigt, oder ein weiteres Antriebswellenkegelrad 7, wie in Figur 2 gezeigt, in antriebsmäßige Verbindung mit der Antriebswelle 3.

In der in Figur 1 gezeigten Schaltstellung ist das Antriebswellenkegelrad 6 durch die innenseitig und bereichsweise auch außenseitig gezahnte Schaltmuffe 5 in eine drehfeste Verbindung mit der Antriebswelle 3 gebracht worden und treibt somit ein Abtriebswellenkegelrad 8 an, welches seinerseits drehfest mit der Abtriebswelle 4 verbunden ist. Ebenso ist ein weiteres Abtriebswellenkegelrad 9 ständig drehfest mit der Abtriebswelle 4 verbunden und treibt diese in der in Figur 2 gezeigten Schaltstellung an, da nun das Antriebswellenkegelrad 7 durch die in Richtung der Längserstreckung der Drehachse 11 verschobene Schaltmuffe 5 mit der Antriebswelle 3 in drehfester Verbindung steht.

Die Schaltvorrichtung des erfindungsgemäßen Getriebes besitzt weiterhin einen Hebelarm 12, der über einen Schaltring 13 und ein Lager 14 mit der Schaltmuffe 5 in Verbindung steht. Anstatt Zahnräder zu verschieben, wird durch die Betätigung des Hebelarms 12 und der damit verbundenen Elemente der Schaltvorrichtung also lediglich die Schaltmuffe 5 verschoben, während die Antriebswelle 3 und die Kegelräder 6,7,8,9 drehbar aber ortsfest im Getriebegehäuse 2 gelagert sind. Demzufolge verbessert sich das erfindungsgemäße Getriebe nicht nur bezüglich seines umbauten Raumes sondern auch bezüglich der während eines Schaltvorganges zu bewegenden Massen.

Das Antriebswellenkegelrad 6 steht in ständigem Eingriff mit dem Abtriebswellenkegelrad 8, während das Antriebswellenkegelrad 7 ständig mit dem Abtriebswellenkegelrad 9 kämmt. In einer Schaltstellung, in der das Antriebswellenkegelrad 6 drehfest mit der Antriebswelle 3 verbunden ist, dreht daher auch das Antriebswellenkegelrad 7, welches über das Abtriebswellenkegelrad 9 mit der sich drehenden Abtriebswelle 4 gekoppelt ist, leer mit. In der alternativen Schaltstellung (das Antriebswellenkegelrad 7 ist mit der Antriebswelle 3 antriebsmäßig verbunden) dreht Kegelrad 6 leer mit.

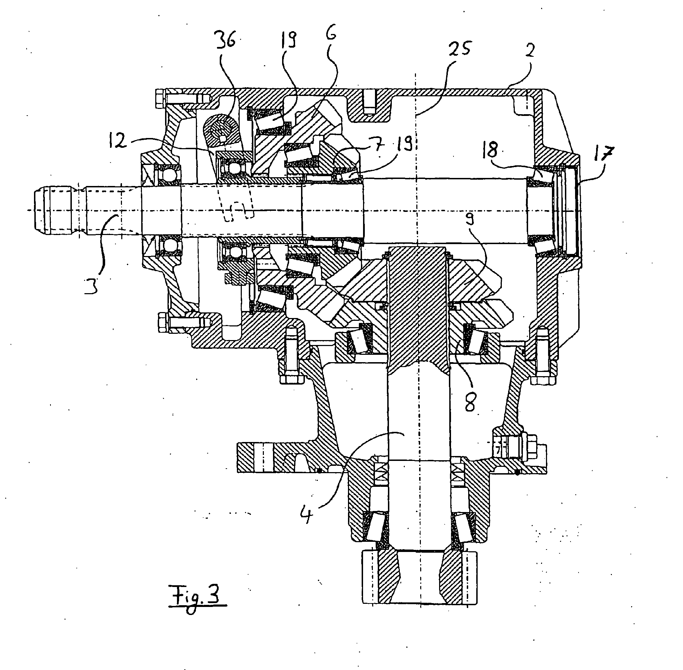

Während in den Figuren 1 und 2 das erfindungsgemäße Getriebe einen Durchtrieb 16 aufweist, der beispielsweise der Übertragung eines Teils des Antriebsdrehmomentes auf ein weiteres Bodenbearbeitungsgerät dient, besitzt das in Figur 3 dargestellte Ausführungsbeispiel ohne Durchtrieb auf der entsprechenden Getriebeseite eine Verschlusskappe 17.

Die Antriebswelle 3 des in den Figuren 1 und 2 dargestellten Getriebes ist auf der Antriebs- und der Durchtriebsseite über jeweils ein Lager 18 gegenüber dem Gehäuse 2 gelagert. Zwischen diesen Lagern befindet sich die Lagerung der Kegelräder 6 und 7. Hierbei zeichnet sich das Ausführungsbeispiel insbesondere durch die gegenseitige Abstützung der auf der Antriebswelle 3 befindlichen Antriebswellenkegelräder 6 und 7 durch zumindest ein Lager 19 aus. Dies führt zu einem weiteren Raumgewinn, da durch die Abstützung der Kegelräder 6, 7 gegeneinander eine jeweilige Abstützung der Kegelräder 6, 7 gegenüber dem Gehäuse 2 und der Antriebswelle 3 vermieden wird. So werden lediglich zwei statt vier weitere Lager 19 benötigt, die zum einen das Kegelrad 6 gegenüber dem Gehäuse 2 und zum anderen das Kegelrad 7 gegenüber der Welle 3 abstützen. Gleichwohl sind die Freilaufeigenschaften des antriebsmäßig nicht mit der Antriebswelle 3 verbundenen Kegelrades nicht eingeschränkt.

Die Abtriebswelle 4 ist in den Figuren 1 und 2 lediglich im Bereich eines Endes mit Hilfe eines Lagers 21 direkt gegenüber einem Teil des Gehäuses 2 gelagert. Eine zweite Lagerung der Abtriebswelle 4 wird durch ein Lager 22 realisiert, welches zwischen Gehäuse 2 und einem auf der Welle 4 befindlichen Abtriebswellenkegelrad 8 angeordnet ist. So ist es möglich, dass der in der Figurenebene der Figuren 1 und 2 obere Teil der Abtriebswelle 4, deren Drehachse 25 sich mit der Drehachse 11 der Antriebswelle 3 kreuzt, mit seinen beiden Kegelrädern 8 und 9 auf einfache Weise dicht an der Antriebswelle 3 positioniert werden kann. Dieses begünstigt ebenfalls die kleine Gestaltung des Getriebes. Die Kegelräder des Getriebes können mit geringen Durchmessern ausgestattet werden.

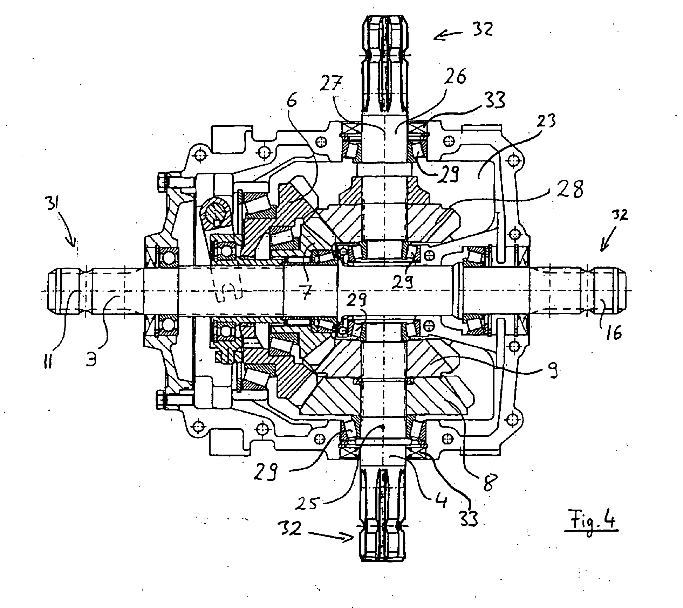

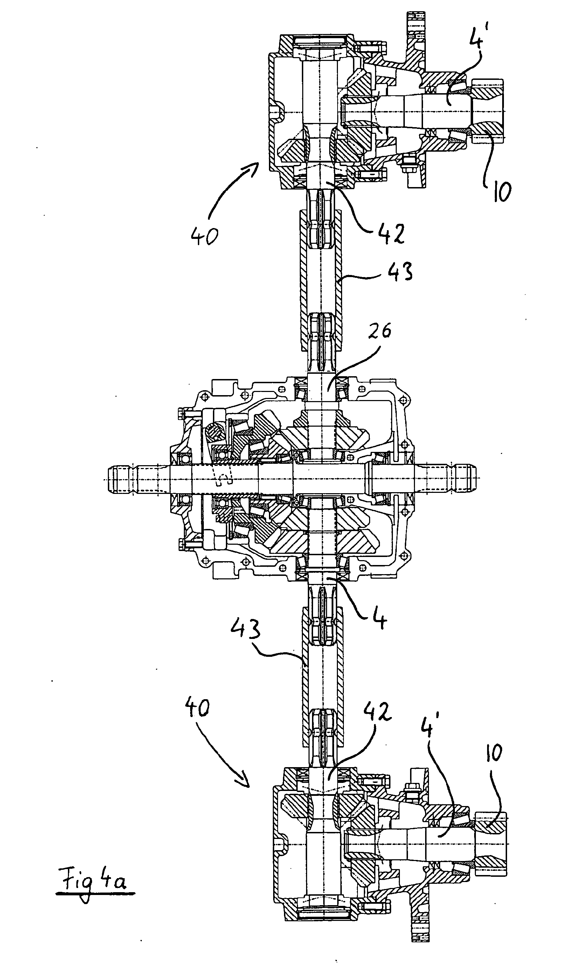

Vorteilhafterweise befindet sich hierbei an dem außen liegenden Ende der Abtriebswelle 4 ein Abtriebswellenzahnrad 10, welches eine weitere Übersetzungsstufe ausbildet. Durch diese weitere Übersetzung aus dem Getriebegehäuse 2 heraus lässt sich die räumliche Erstreckung des Gehäuses 2 weiter reduzieren. Statt eines direkten Zahneingriffs über das Zahnrad 10 auf beispielsweise einen Maschinenbalken einer Bodenbearbeitungsmaschine können auch andere Möglichkeiten des Kraftübergangs oder Kupplungen verwendet werden. Beispielhaft wird weiter unten (Fig. 4a) eine Ausbildung eines erfindungsgemäßen Getriebes mit zwei Seitengetrieben 40 beschrieben, auf deren Abtriebswellen 4' jeweils ein Zahnrad 10 zur Ausbildung einer weiteren Übersetzungsstufe mit den Wellen 4, 26 angeordnet ist.

Das Abtriebswellenzahnrad 10 ist drehfest aber vorzugsweise genauso lösbar wie die übrigen Kegelräder 8 und 9 mit der Abtriebswelle 4 verbunden, womit die Wartung eines erfindungsgemäßen Getriebes vereinfacht wird.

Um einerseits die beschriebenen Lager vor Verschmutzungen von außen zu schützen sowie anderseits möglichst wenig Schmiermittel aus dem Gehäuseinnenraum 23 des Getriebes austreten zu lassen, ist der Gehäuseinnenraum 23 mit Dichtungen 24 abgedichtet.

Das in Figur 4 dargestellte Ausführungsbeispiel eines weiteren erfindungsgemäßen Getriebes weist neben der Antriebswelle 3, die mit einem Durchtrieb 16 versehen ist, zusätzlich zur ersten Abtriebswelle 4 eine weitere Abtriebswelle 26 auf, deren Drehachse 27 sich in einer Flucht mit der Drehachse 25 der ersten Abtriebswelle 4 befindet. Ein drehfest mit der weiteren Abtriebswelle 26 verbundenes Kegelrad 28 kämmt mit dem Antriebswellenkegelrad 7 und ist über das Kegelrad 9 mit der ersten Abtriebswelle 4 verbunden. Aufgrund der Position der Schaltmuffe 5 befindet sich das Antriebswellenkegelrad 7 in drehfester Verbindung mit der Antriebswelle 3, so dass beide Abtriebswellen 4, 26 direkt von dem Antriebswellenkegelrad 7 angetrieben werden.

Wird die Schaltmuffe 5 nun in die alternative Schaltstellung gebracht, in der das Antriebswellenkegelrad 6 mit der Antriebswelle 3 verbunden ist, so treibt das Antriebswellenkegelrad 6 lediglich die erste Abtriebswelle 4 an. Das Kegelrad 7, das nicht mehr mit der Antriebswelle 3 verbunden ist aber nach wie vor die beiden Abtriebswellen 4, 26 über die Kegelräder 28 und 9 verbindet, stellt nun eine Antriebsverbindung von der Abtriebswelle 4 zu der Abtriebswelle 26 dar. Die Abtriebswelle 26 wird bei dieser Schaltstellung also indirekt angetrieben. Damit wird auf der Abtriebswelle 26 ein Kegelrad eingespart. Aufgrund der identischen Dimensionierung der Kegelräder 9 und 28 werden die Abtriebswellen 4 und 26 in beiden Schaltstellungen mit identischer Drehzahl angetrieben.

Anders als die in den Figuren 1 und 2 dargestellten Ausführungsbeispiele sind in Fig. 4 die Kegelräder 8, 9, 28 der Abtriebswellen 4, 26 zwischen den beiden für die Lagerung der Wellen 4, 26 vorgesehenen Lagern 29 angeordnet. Dieses bedarf zwar eines konstruktiv leicht erhöhten Aufwands in der unmittelbaren Umgebung der Antriebswelle 3, gleichwohl wird das eingebrachte Drehmoment von einem Antrieb 31 auf insgesamt 3 Abtriebe 32 des Getriebes 1, davon ein Durchtrieb 16, verteilt. Dichtungen 33 dichten wiederum den Innenraum 23 des Getriebes gegenüber dem Getriebeaußenraum ab.

Statt der Anordnung eines Zahnrades 10 auf einer der Abtriebswellen 4, 26 und der damit einhergehenden ummittelbaren Ausbildung einer weiteren Übersetzungsstufe im Bereich der Abtriebswellen 4, 26 ist es auch möglich, das Zahnrad 10 auf einer weiteren Abtriebswelle 4' anzuordnen und damit die erwähnte weitere Übersetzungsstufe zu verlagern. So zeigt Fig. 4a eine weitere Ausbildung eines erfindungsgemäβes Getriebes mit an den Abtriebswellen 4, 26 angeordneten Seitengetrieben 40, welche vorteilhafterweise als Kegelradwinkelgetriebe ausgebildet sind. Die Seitengetriebe 40 weisen jeweils eine weitere Abtriebswelle 4' auf, die von den Abtriebswellen 4, 26 des in Fig. 4 gezeigten Getriebes mittelbar angetrieben werden. An den Enden dieser weiteren Abtriebswellen 4' angeordnete Zahnräder 10 sind im Bereich eines Maschinenbalkens angeordnet und bilden dort jeweils eine weitere Übersetzungsstufe aus.

Die Verbindung zwischen der Antriebswelle 42 eines Seitengetriebes 40 und einer Abtriebswelle 4, 26 des in Fig. 4a gezeigten zentralen Getriebes kann auf verschiedene Weisen realisiert werden. Statt der gezeigten Verbindungswellen 43 ist es beispielsweise auch denkbar, Gelenkwellen zwischen dem zentralen Getriebe und den Seitengetrieben 40 vorzusehen. So lässt sich die in Fig. 4a gezeigte Getriebeeinheit für unterschiedliche Bodenbearbeitungsmaschinen verwenden.

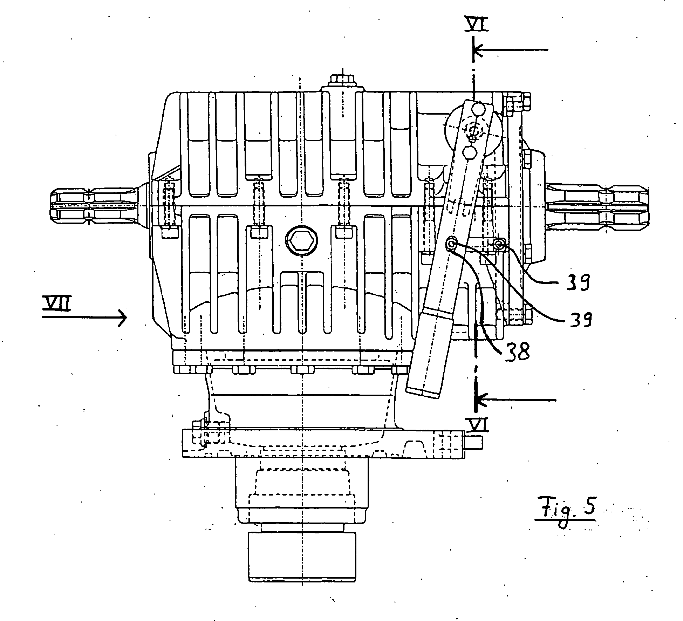

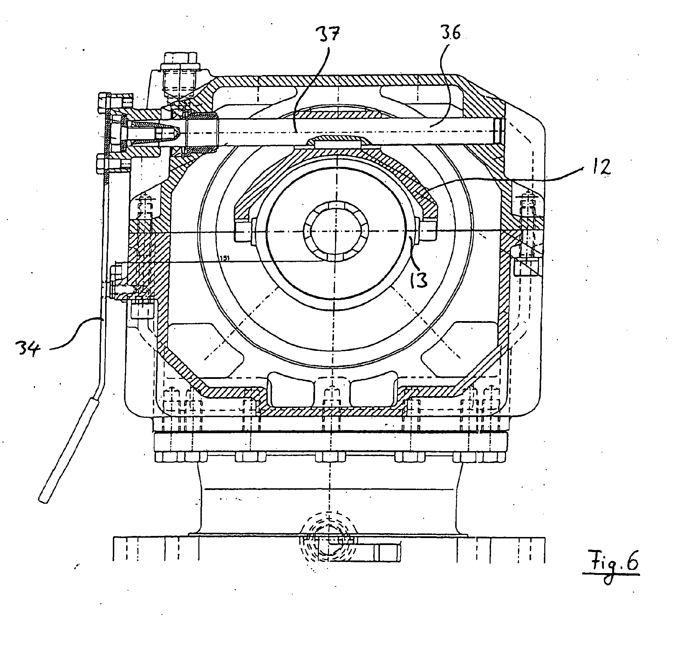

Die Figuren 5 bis 7 verdeutlichen den Aufbau der Schaltvorrichtung eines erfindungsgemäßen Getriebes. Ein außerhalb des Gehäuses 2 angeordneter Schalthebel 34 ist mit einer Schaltachse 36 drehfest verbunden und verdreht diese bei manueller Betätigung um ihre Drehachse 37. Daraufhin verschwenkt der an der Schaltachse 36 befestigte Hebelarm 12 und führt mit Hilfe des Schaltrings 13 die Schaltmuffe 5 in eine Richtung längs der bereits erwähnten Drehachse 11 der Antriebswelle 3. Statt der manuellen Betätigung des Schalthebels 34, der bei diesem Ausführungsbeispiel in zwei Positionen festgestellt werden kann (Figur 5), ist es auch denkbar, zur Vereinfachung der Bedienung motorische Stellmittel vorzusehen, die die Schaltachse 36 zur Einnahme der verschiedenen Schaltstellungen drehen.

Um den Schalthebel 34 mit seiner Ausnehmung 38 in der jeweils anderen Schaltstellung festzulegen, können in das Gehäuse hineingesteckte Sicherungsstifte 39 gelöst, der Schalthebel 34 in die alternative Schaltstellung verlagert und anschlieβend wieder mit einem der Sicherungsstifte 39 gesichert werden. Alternativ dazu kann der Hebelarm 34 eine gewisse Biegsamkeit in Richtung der Längserstreckung der Drehachse 37 aufweisen und von den Sicherungsstiften 34 abgezogen werden. Bei einer weiteren, nicht dargestellten Ausführungsform ist es stattdessen auch möglich, die Verbindung zwischen Schaltachse 36 und dem starren Schalthebel 34 beweglich auszubilden und den Schalthebel 34 z.B. durch ein mit Federkraft beaufschlagbares Gelenk in der alternativen Schaltstellung festzulegen.

Die in den Figuren dargestellten Ausführungsbeispiele eines erfindungsgemäßen Getriebes weisen lediglich zwei Schaltstellungen auf, es liegt jedoch genauso im Rahmen der Erfindung, ein Getriebe mit mehr als zwei Schaltstellungen zu konstruieren. Entsprechend sind dann auf der schaltbaren Achse 3 und auf zumindest einer Abtriebsachse 4 mehr Kegelräder vorzusehen.

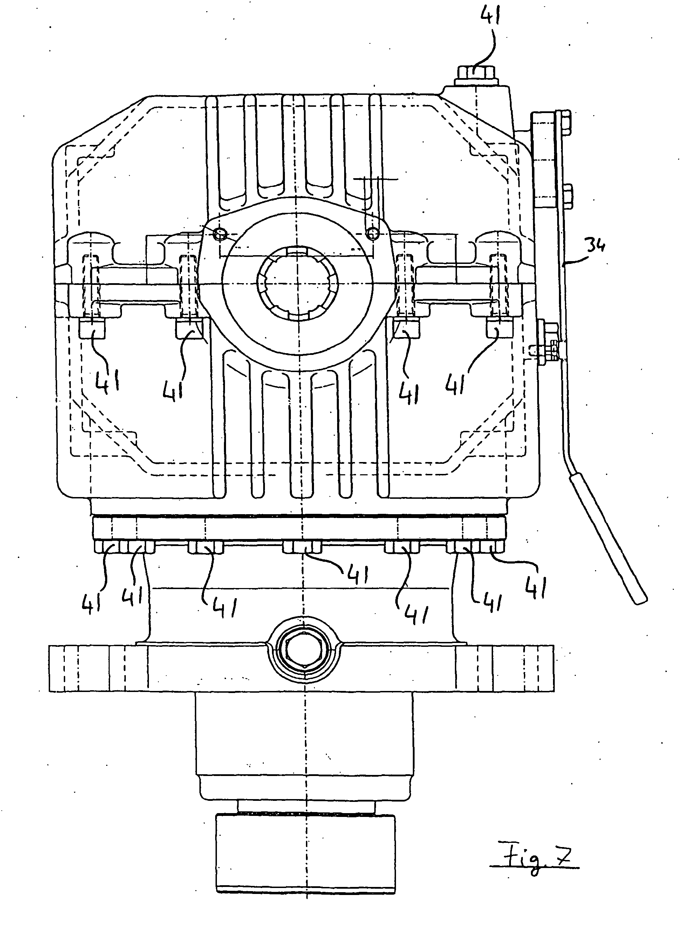

Zur komfortablen Wartung des erfindungsgemäßen Getriebes, das bevorzugt in landwirtschaftlichen Bodenbearbeitungsmaschinen wie z.B. Kreiseleggen eingesetzt wird, ist das Getriebegehäuse 2 mehrteilig und mit einer Reihe von lösbaren Befestigungselementen 41, beispielsweise Schrauben, gesichert (Fig. 7).

## Patentansprüche

1. Getriebe für landwirtschaftliche Bodenbearbeitungsmaschinen, insbesondere für Kreiseleggen, mit einer Antriebs- (3) und zumindest einer Abtriebswelle (4, 4',26), die über Zahnräder (6, 7, 8, 9) miteinander verbindbar sind, sowie mit einer Schaltvorrichtung mit zumindest zwei Schaltstellungen, wobei in den verschiedenen Schaltstellungen jeweils eines von wenigstens zwei auf einer Welle (3, 4) angeordneten Zahnrädern (6, 7, 8, 9) mit dieser antriebsmäßig verbunden ist und die Zahnräder der Antriebs- und zumindest einer Abtriebswelle (3, 4, 26) als miteinander kämmende Kegelräder (6, 7, 8, 9) ausgebildet sind und wobei auf der Antriebs- und zumindest einer Abtriebswelle (3, 4) jeweils mindestens zwei Kegelräder (6, 7, 8, 9) angeordnet sind, die jeweils paarweise in einer Schaltstellung die Antriebs- und Abtriebswelle (3, 4) miteinander verbinden, **dadurch gekennzeichnet, dass** die Kegelräder (6, 7) zumindest teilweise über ein oder mehrere Lager (19) gegeneinander abgestützt sind und ein auf einer Abtriebswelle (4,4',26) im Bereich einer Bearbeitungsvorrichtung anordbares Zahnrad (10) mit der Welle (4,4',26) eine weitere Übersetzungsstufe ausbildet.

2. Getriebe nach Anspruch 1, **dadurch gekennzeichnet, dass** die Schaltvorrichtung eine Schaltmuffe (5) aufweist, durch die ein Kegelrad (6, 7) in einer Schaltstellung mit seiner Welle (3) verbindbar ist.

3. Getriebe nach Anspruch 2, **dadurch gekennzeichnet, dass** die Schaltmuffe (5) auf der Antriebswelle (3) angeordnet ist.

4. Getriebe nach Anspruch 2 oder 3, **dadurch gekennzeichnet, dass** die Schaltmuffe (5) mittels zumindest eines Hebelarms (12) entlang einer Welle (3) verschiebbar ist.

5. Getriebe nach Anspruch 4, **dadurch gekennzeichnet, dass** die Schaltmuffe (5) über einen Schaltring (13) mit dem Hebelarm (12) verbunden ist.

6. Getriebe nach einem der Ansprüche 1 bis 5, **dadurch gekennzeichnet, dass** es ein mechanisches, pneumatisches und/oder hydraulisches und/oder elektromotorisches Stellmittel aufweist.

7. Getriebe nach einem der Ansprüche 1 bis 6 **dadurch gekennzeichnet, dass** es mit einem Durchtrieb (16) versehen ist.

8. Getriebe nach einem der Ansprüche 1 bis 7, **dadurch gekennzeichnet, dass** die Schaltvorrichtung ein von außerhalb eines Gehäuses (2) des Getriebes zu betätigendes Stellmittel (34) aufweist, sowie Mittel (38, 39), dieses in einer Schaltstellung festzulegen.

9. Getriebe nach einem der Ansprüche 1 bis 8, **dadurch gekennzeichnet, dass** das Zahnrad (10) auf einer von der die Kegelräder (8,9) aufweisenden Abtriebswelle (4) angetriebenen weiteren Abtriebswelle (4') angeordnet ist.

10. Getriebe nach Anspruch 9 mit zumindest einem Seitengetriebe (40), **dadurch gekennzeichnet, dass** das Seitengetriebe (40) die weitere Abtriebswelle (4') zumindest teilweise umfasst.

11. Getriebe nach Anspruch 10, **dadurch gekennzeichnet, dass** das Seitengetriebe als Kegelradwinkelgetriebe ausgebildet ist.

12. Getriebe nach einem der Ansprüche 1 bis 11 und mit einer zweiten Abtriebswelle (26), **dadurch gekennzeichnet, dass** die Antriebswelle (3) direkt die zweite Abtriebswelle (26) antreibt, wobei Antriebs- und zweite Abtriebswelle (3, 26) über miteinander kämmende Kegelräder (7, 28) verbunden sind.

13. Getriebe nach einem der Ansprüche 1 bis 12 und mit einer zweiten Abtriebswelle (26), **dadurch gekennzeichnet, dass** die Antriebswelle (3) über die erste Abtriebswelle (4) indirekt die zweite Abtriebswelle (26) antreibt, wobei die erste Abtriebswelle (4) mit der zweiten Abtriebswelle (26) über Kegelräder (7, 9, 28) verbunden ist.

14. Getriebe nach Anspruch 13, **dadurch gekennzeichnet, dass** zumindest eines der die Abtriebswellen (4, 26) miteinander verbindenden Kegelräder (7, 9, 28) auf der Antriebswelle (3) angeordnet ist.

15. Landwirtschaftliche Bodenbearbeitungsmaschine, insbesondere Kreiselegge, **gekennzeichnet durch** ein Getriebe nach einem der vorherigen Ansprüche.

## Claims

1. Transmission for agricultural machinery for cultivation and in particular for rotary harrows, having an input shaft (3) and at least one output shaft (4, 4', 26) which are connected together by gears (6, 7, 8, 9), and having a switching arrangement having at least two switched positions, respective ones of at least two gears (6, 7, 8, 9) which are arranged on shafts (3, 4) being connected to the said shafts to drive them in the different switched positions and the gears on the input shaft and the at least one output shaft (3, 4, 26) taking the forming of meshing bevel gears and there being arranged on each of the input shaft and the at least one output shaft (3, 4) at least two bevel gears (6, 7, 8, 9) which, when paired, connect the input shaft and the output shaft together in respective switched positions, **characterised in that** the bevel gears (6, 7) are at least partly supported on one another by one or more bearings (19), and a gear (10) which can be arranged on an output shaft (4, 4', 26) in the region of a cultivation device produces, with the shaft (4, 4', 26), a further transmission ratio.

2. Transmission according to claim 1, **characterised in that** the switching arrangement has a switching sleeve (5) by which a bevel gear (6, 7) can be connected to its shaft (3) in a switched position.

3. Transmission according to claim 2, **characterised in that** the switching sleeve (5) is arranged on the input shaft (3).

4. Transmission according to claim 2 or 3, **characterised in that** switching sleeve (5) is displaceable along a shaft (3) by means of at least one lever arm (12).

5. Transmission according to claim 4, **characterised in that** the switching sleeve (5) is connected to the lever arm (12) by a switching ring (13).

6. Transmission according to one of claims 1 to 5, **characterised in that** it has a mechanical, pneumatic and/or hydraulic and/or electric motor operated actuator.

7. Transmission according to one of claims 1 to 6, **characterised in that** it is provided with a direct through-drive (16).

8. Transmission according to one of claims 1 to 7, **characterised in that** the switching arrangement has an actuator (34) which has to be actuated from outside a casing (2) of the transmission, and means (38, 39) for locking the actuator (34) in one switched position.

9. Transmission according to one of claims 1 to 8, **characterised in that** the gear (10) is arranged on a further output shaft (4') which is driven by the output shaft (4) which has the bevel gears (8, 9).

10. Transmission according to claim 9 having at least one final-drive gearbox (40), **characterised in that** the final-drive gearbox (40) comprises at least part of the further output shaft (4').

11. Transmission according to claim 10, **characterised in that** the final-drive gearbox takes the form of an angle bevel gearbox.

12. Transmission according to one of claims 1 to 11 having a second output shaft (26), **characterised in that** the input shaft (3) drives the second output shaft (26) directly, the input shaft and the second output shaft (3, 26) being connected by meshing bevel gears (7, 28).

13. Transmission according to one of claims 1 to 12 having a second output shaft (26), **characterised in that** the input shaft (3) drives the second output shaft (26) indirectly via the first output shaft (4), the first output shaft (4) being connected to the second output shaft (26) by bevel gears (7, 9, 28).

14. Transmission according to claim 13, **characterised in that** at least one of the bevel gears (7, 9, 28) which connect the output shafts (4, 26) together is arranged on the input shaft (3).

15. Agricultural machine for cultivation, and in particular a rotary harrow, **characterised by** a transmission according to one of the foregoing claims.

## Revendications

1. Transmission pour des machines agricoles travaillant la terre notamment pour des herses rotatives comprenant :
- un arbre d'entraînement (3) et au moins un arbre de sortie (4, 4', 26) reliés l'un à l'autre par des pignons dentés (6, 7, 8, 9) ainsi qu'un dispositif de commutation ayant au moins deux positions de commutation,
- dans les différentes positions de commutation chaque fois au moins l'un des deux pignons dentés (6, 7, 8, 9) installés sur un arbre (3, 4) est relié dans le sens de l'entraînement et les pignons dentés de l'arbre d'entraînement et d'au moins un arbre de sortie (3, 4, 26) sont des pignons coniques (6, 7, 8, 9) s'engrenant les uns avec les autres, et
- l'arbre l'entraînement et/ou un arbre de sortie (3, 4) comportent respectivement au moins deux pignons coniques (6, 7, 8, 9) reliés par paires dans une position de commutation de l'arbre d'entraînement et de l'arbre de sortie (3, 4),
**caractérisé en ce que**
les pignons coniques (6, 7) sont appuyés au moins en partie par l'intermédiaire d'un ou plusieurs paliers (19), et un pignon denté (10) installé sur l'arbre de sortie (4, 4', 26) dans la zone d'un dispositif de travail, forment un autre étage de démultiplication avec l'arbre (4, 4', 26).

2. Transmission selon la revendication 1,
**caractérisé en ce que**
le dispositif de commutation comporte un manchon de commutation (5) permettant de relier un pignon conique (6, 7) à l'arbre (3) dans une position de commutation.

3. Transmission selon la revendication 2,
**caractérisé en ce que**
le manchon de commutation (5) est installé sur l'arbre d'entraînement (3).

4. Transmission selon la revendication 2 ou 3,
**caractérisé en ce que**
le manchon de commutation (5) est coulissé le long de l'arbre (3) par au moins un bras de levier (12).

5. Transmission selon la revendication 4,
**caractérisé en ce que**
le manchon de commutation (5) est relié au bras de levier (12) par une bague de commutation (13).

6. Transmission selon l'une des revendications 1 à 5,
**caractérisé en ce qu'**
il comporte un moyen d'actionnement mécanique, pneumatique et/ou hydraulique et/ou un moteur électrique.

7. Transmission selon l'une des revendications 1 à 6,
**caractérisé en ce qu'**
il comporte une transmission directe (16).

8. Transmission selon l'une des revendications 1 à 7,
**caractérisé en ce que**
le dispositif de commutation comporte un moyen d'actionnement (34) actionné de l'extérieur du boîtier (2) de la transmission ainsi que des moyens (38, 39) qui fixent le moyen d'actionnement dans une position de commutation.

9. Transmission selon l'une des revendications 1 à 8,
**caractérisé en ce que**
le pignon denté (10) est monté sur un autre arbre de sortie (4') entraîné par l'arbre de sortie (4) comportant les pignons coniques (8, 9).

10. Transmission selon la revendication 9, comportant au moins une transmission latérale (40),
**caractérisé en ce que**
la transmission latérale (40) entoure au moins en partie l'autre arbre de sortie (4').

11. Transmission selon la revendication 10,
**caractérisé en ce que**
la transmission latérale est une transmission d'angle à pignons coniques.

12. Transmission selon l'une des revendications 1 à 11, et comportant un second arbre de sortie (26),
**caractérisé en ce que**
l'arbre d'entraînement (3) entraîne directement le second arbre de sortie (26),
l'arbre d'entraînement et/ou le second arbre de sortie (3, 26) sont reliés par des pignons coniques (7, 28) en prise.

13. Transmission selon l'une des revendications 1 à 12, comportant un second arbre de sortie (26),
**caractérisé en ce que**
l'arbre d'entraînement (3) entraîne indirectement le second arbre de sortie (26) par l'intermédiaire du premier arbre d'entraînement (4),
le premier arbre d'entraînement (4) est relié au second arbre de sortie (26) par des pignons coniques (7, 9, 28).

14. Transmission selon la revendication 13,
**caractérisé en ce qu'**
au moins l'un des pignons coniques (7, 9, 28) reliant les arbres de sorties (4, 26) est installé sur l'arbre d'entraînement (3).

15. Machine agricole pour le travail du sol notamment herse rotative
**caractérisé en ce qu'**
elle comporte une transmission selon l'une des revendications précédentes.
